# FASCICULE DE BREVET EUROPEEN

(11) **EP 3 529 024 B1**
(45) Date de publication et mention de la délivrance du brevet: **15.07.2020**
(21) Numéro de dépôt: 17800935.3
(22) Date de dépôt: 17.10.2017
(51) Int. Cl.: B29C 33/00, B29C 33/36, B29C 43/08, B29C 45/64, B29C 45/26, B29C 45/06

(54) **PROCEDE ET DISPOSITIF DE SURMOULAGE PAR INJECTION**
PROZESS UND VORRICHTUNG ZUM UMSPRITZEN EINES EINLEGETEILS
PROCESS AND DEVICE FOR OVERMOLDING AN INSERT

(30) Priorité: 18.10.2016 EP 16194459
(43) Date de publication de la demande: 28.08.2019
(73) Titulaire: Aisapack Holding SA, 1896 Vouvry (CH)
(72) Inventeur: HERMANT, Etienne, 51000 Chalons en Champagne (FR)
(74) Mandataire: Grosfillier, Philippe
(86) Numéro de dépôt international: PCT/IB2017/056430
(87) Numéro de publication internationale: WO 2018/073735

(56) Documents cités:
- DE-A1- 19 901 114
- FR-A1- 2 442 125
- US-B1- 6 461 558

## Description

### DEMANDE CORRESPONDANTE

La présente demande revendique la priorité de la demande européenne antérieure n°16194459.0 déposée le 18 octobre 2016 au nom de AISAPACK HOLDING S.A., le contenu de cette demande antérieure étant incorporé par référence en son entier dans la présente demande.

### DOMAINE TECHNIQUE ET ÉTAT DE LA TECHNIQUE

La présente invention concerne le domaine de la fabrication d'un objet plastique multi-composant par surmoulage d'un insert qui a été préalablement disposé dans le moule d'injection. Plus précisément, l'objet de l'invention concerne un procédé et un dispositif de surmoulage comportant une tourelle en rotation indexée sur lequel sont disposés des moules d'injection, et des stations fixes disposées autour de la tourelle interagissant avec les moules.

Les procédé et dispositifs de moulage par injection comprenant des moules disposés sur une plateforme rotative indexée sont divulgués dans l'état de la technique antérieure pour former des objets en matière thermoplastique injectée. On trouve par exemple le brevet FR7832832 qui décrit un dispositif rotatif avec un premier poste consistant à injecter la matière dans la cavité du moule et un second poste consistant à compacter la matière grâce à une tige de pression introduite dans un orifice du moule. L'objet est ensuite refroidi puis démoulé. Le brevet FR7832832 décrit un procédé et dispositif rotatif indexé comprenant deux stations et un moule par station. Ce procédé et ce dispositif ne sont pas adaptés pour effectuer des opérations de surmoulage, le positionnement de l'insert dans la cavité du moule étant difficile compte tenu de la configuration du dispositif. Ce dispositif ne permet pas non plus la production d'objets moulés à grande cadence de production car le compactage de la matière dans la cavité du moule pendant le refroidissement de la pièce est réalisé sur le second poste lorsque la tourelle est à l'arrêt.

Le brevet US6461558 décrit une méthode et un dispositif de moulage rotatif pour encapsuler des circuits intégrés. Le dispositif de moulage proposé comporte une tourelle indexée sur laquelle sont disposées des presses. Le dispositif comporte également des stations fixes disposées autour de la tourelle pour charger les inserts dans la cavité des moules ; pour charger la matière moulée ; et pour décharger les objets. Dans le brevet US6461558, les moyens de presse sont embarqués sur la tourelle ainsi que les pots de transfert ce qui augmente de façon importante la masse de la tourelle et par conséquent son inertie. Ce type de dispositif qui est bien adapté au moulage à faible cadence de production, ne permet pas, du fait de son inertie, le moulage à grande cadence de production. Le dispositif décrit dans le brevet US6461558 est conçu également pour la transformation des résines thermodurcissables qui réticulent dans des moules chauds. Par contre, ce dispositif n'est pas prévu pour le moulage d'objets en résine thermoplastique. Ce dispositif ne peut pas être utilisé pour les résine thermoplastiques qui nécessitent une phase de chauffage préalable à l'injection dans le moule, et une phase de refroidissement dans des moules refroidis pour durcir et prendre la forme de l'objet. Ce dispositif présente également l'inconvénient d'avoir les moyens de presse embarqués sur la tourelle, ce qui implique un nombre de presse égal au nombre de moule et par conséquent une masse embarquée élevée qui augmente considérablement l'inertie de la tourelle et pénalise le temps de cycle.

La demande de brevet DE19901114 décrit une machine de moulage comprenant une tourelle rotative par intermittence portant une pluralité de moules et des stations disposées autour de la tourelle. La machine de moulage comporte notamment une station d'injection équipée d'une presse et une station de décharge des objets moulés. Selon la demande de brevet DE19901114, la presse est disposée à l'extérieur de la tourelle et dispose de moyens pour déplacer les moules entre la tourelle et la station de moulage et entre la tourelle et la station de décharge. La demande de brevet DE19901114 présente l'avantage de ne pas embarquer les moyens de fermeture sous contrainte du moule et par conséquent de réduire l'inertie de la tourelle. Cependant, cette demande de brevet présente l'inconvénient lié à la manutention du moule entre la tourelle et la station de presse et entre la tourelle et la station de décharge. La méthode proposée n'est pas adaptée au moulage dans des outillages multi-cavités produits à grande cadence. La manutention du moule nécessite la connexion et déconnexion du circuit de refroidissement du moule à chaque manutention ce qui n'est pas compatible avec les grandes cadences de production.

### Définitions :

Dans la présente demande, on entend par moyens embarqués, les moyens fixés sur la tourelle et par conséquent animés d'un mouvement rotatif indexé.

A contrario, on entend par moyens fixes, les moyens qui ne sont pas solidaires de la tourelle mais disposés autour de la tourelle. Les moyens dits "fixes" comportent généralement des parties en mouvement comme par exemple les moyens de positionnement des inserts, les moyens de déchargement des objets ou encore les moyens d'injection.

### SOMMAIRE DE L'INVENTION

Un but de l'invention est de proposer un dispositif de surmoulage rotatif indexé et un procédé de moulage mis en oeuvre par le dispositif qui sont améliorés par rapport à ceux connus de l'état de la technique.

Plus précisément, un but de l'invention est de proposer un dispositif et un procédé de surmoulage rotatif indexé permettant de remédier aux inconvénients précités de l'état de la technique. La présente invention est particulièrement adaptée à la fabrication à grande cadence d'objets nécessitant au moins une opération de surmoulage.

Le dispositif de surmoulage selon l'invention comprend notamment une tourelle rotative indexée sur laquelle sont embarqués des moules refroidis et au moins cinq stations fixes disposées autour de ladite tourelle. Sur les cinq stations, au moins trois stations sont utilisées pour effectuer les opérations suivantes :
- Positionnement des inserts dans les cavités du moule,
- Injection de la matière plastique dans les cavités du moule,
- Démoulage des objets au moins partiellement refroidis.

Les deux autres stations restantes peuvent être utilisées pour augmenter le temps de refroidissement, ou pour effectuer des opérations de contrôles, ou pour réaliser des opérations d'actionnement des moules, ou encore pour effectuer des opérations sur les inserts et/ou sur les objets moulés.

Selon un mode de réalisation préférentiel, la tourelle peut comprendre un nombre de station compris entre cinq et huit.

Selon un mode d'exécution de l'invention, le nombre de moules disposés sur la tourelle est de préférence égal au nombre de stations. Le nombre de moules multi-cavités disposés sur la tourelle est au moins de cinq et est préférentiellement compris entre cinq et huit.

Afin de permettre la production de pièces surmoulées à grande cadence, les moules disposés sur la tourelle comportent plusieurs cavités. Selon l'invention le nombre de cavité par moule est par exemple compris entre quatre et trente-deux et préférentiellement entre quatre et seize. Le nombre maximal de cavités par moule découle de la complexité de la manipulation et du surmoulage d'un nombre d'insert élevé.

Dans un mode d'exécution, une première caractéristique de l'invention réside dans le fait que le nombre de pots d'injection est égal au nombre de cavités par moule. Cela signifie que pendant la phase d'injection, chaque cavité du moule est reliée à un pot d'injection indépendant. Ce mode de réalisation permet de remplir chaque cavité indépendamment des cavités adjacentes. Le mode de remplissage proposé est particulièrement avantageux pour le surmoulage d'inserts à grande cadence de production.

Le remplissage de chaque cavité de façon indépendante permet de palier les inconvénients du surmoulage d'inserts dans un moule multi-cavités.

L'invention permet en particulier de remédier aux inconvénients liés à l'absence d'un insert dans l'une des cavités. Notamment, si un insert est absent de l'une des cavités au moment de l'injection, la cavité sans insert n'est pas remplie sans que cela ait une influence sur la qualité des pièces produites dans les autres cavités. Dans un système d'injection classique où toutes les cavités sont remplies simultanément, l'absence d'un insert de l'une des cavités a pour conséquence la production de pièces défectueuses car le remplissage des empreintes ne se fait plus de façon équilibrée. De plus, dans un système d'injection classique, le remplissage déséquilibré des empreintes engendre souvent des difficultés à l'éjection des pièces ce qui provoque des arrêts de la production afin d'extraire manuellement du moule les pièces incomplètes. L'invention permet de remédier à cette perte de productivité en ne remplissant pas la cavité sans insert et, par voie de conséquence en évitant un remplissage déséquilibré et ses conséquences néfastes pour la productivité qui doivent être évitées dans un processus à grande cadence de production.

Selon un mode d'exécution de l'invention, l'utilisation d'un dispositif de détection de la présence des inserts dans les cavités du moule permet de définir les cavités à remplir avant l'étape d'injection. Un tel dispositif de détection des inserts est de préférence positionné à l'extérieur du moule. Ce dispositif de détection effectue une opération de contrôle, après le positionnement des inserts et avant la fermeture du moule. De préférence le système de détection est un dispositif visuel (p.ex. optique ou caméra) couplé à un module d'analyse d'image. Selon un mode d'exécution, l'invention permet le remplissage uniquement des cavités dans lesquelles un insert est détecté. Un avantage de ce mode réside dans le fait que les opérations étant réalisées sur un système rotatif indexé, l'opération de détection peut être faite en temps masqué sans que cela affecte la cadence de production de la machine. Par exemple, une station de détection des inserts peut être située entre la station de positionnement des inserts et la station d'injection. Selon un autre mode de réalisation, la détection des inserts est faite pendant la rotation de la tourelle.

Un autre avantage du remplissage indépendant des cavités est de permettre l'utilisation d'inserts moins précis au niveau dimensionnel. Les variations dimensionnelles des inserts peuvent influencer le volume occupé par chaque insert dans la cavité du moule. Il en résulte un volume variable de résine injecté dans chaque empreinte. Lorsque les variations dimensionnelles des inserts ne sont pas négligeables par rapport au volume de matière injecté, il en résulte dans un système d'injection multi-cavités classique un remplissage déséquilibré des empreintes et par conséquent des variations dimensionnelles importantes sur les objets moulés ou l'apparition de bavures sur les objets moulés. Grâce au remplissage indépendant des cavités, l'invention permet l'usage d'inserts peu précis tout en conservant une grande précision au niveau de la partie moulée de l'objet. L'utilisation d'inserts moins précis permet dans certains cas de réduire le coût des pièces produites. L'invention permet de remédier aux problèmes de bavures sur les objets moulés et ainsi diminuer le taux de rebut.

Un autre avantage du remplissage indépendant des cavités est lié au rejet des inserts mal positionnés dans la cavité du moule. L'injection indépendante des cavités couplé au système de contrôle de la position de chaque insert dans la cavité du moule permet de ne pas remplir les cavités dans lesquelles le positionnement de l'insert est hors tolérance. Le principe utilisé dans les systèmes classiques consiste à injecter la résine dans toutes les cavités et à éjecter ensuite les pièces défectueuses. Cette méthode génère des déchets importants qui par nature sont difficile à recycler et est inefficace puisque l'on fabrique des objets défectueux.

L'invention permet de s'affranchir de cet inconvénient. Dans de nombreux cas les inserts éjectés peuvent être réutilisés (éventuellement après correction), sinon leur recyclage est facilité car l'opération de surmoulage n'a pas eu lieu.

Un autre avantage du remplissage indépendant des cavités est lié à la flexibilité apportée par cette méthode d'injection. L'invention permet par exemple de réaliser par surmoulage des pièces de masse différente. Cela est particulièrement intéressant pour réaliser conjointement des produits différents destinés à être conditionnés ensemble (par exemple une gamme de tournevis avec des manches de tailles différentes). Le flux de production est grandement amélioré car le conditionnement des produits fabriqués peut être fait en ligne directement après l'opération de surmoulage, sans stockage des produits, contrairement au procédé de production classique, ou un seul type de produit peut être réalisé à la fois sur la même machine.

Un autre avantage du remplissage indépendant des cavités est lié aux opérations de maintenance desdites cavités. Avec un dispositif de surmoulage multi-cavités par injection classique, lorsqu'une cavité est défectueuse et nécessite une opération de maintenance, il est nécessaire d'arrêter la production en cours pour éviter un nombre de rebuts trop important. Avec l'invention, la cavité défectueuse est identifiée et désactivée afin de ne plus l'utiliser. Ce mode opératoire permet de terminer la production avec les autres cavités et d'effectuer la maintenance de ladite cavité défectueuse pendant la production ou à postériori. L'invention permet donc de produire sans interruption même si une cavité devient défectueuse accidentellement pendant un cycle de production.

Un autre avantage du remplissage indépendant des cavités est lié à la possibilité de supprimer les carottes d'injection dans des moules multi-cavités sans canaux chauds.

L'invention est particulièrement avantageuse pour le surmoulage d'inserts fragiles nécessitant de l'usage de faibles pression et température de la résine injectée lors du remplissage des cavités. Le remplissage indépendant des cavités permet la réduction de façon optimale des température et pression d'injection.

Dans un mode d'exécution, l'invention se caractérise également par le fait que chaque moule dispose de moyens de verrouillage indépendants. L'indépendance des moyens de verrouillage permet de réaliser le refroidissement et le compactage des objets en dehors de la station d'injection. Ce mode d'exécution est particulièrement avantageux car il permet d'optimiser le temps de cycle et d'atteindre des cadences de production élevées.

Les moyens de verrouillage permettent de conserver le moule fermé après le remplissage des cavités et la libération des moyens de fermeture sous contrainte du moule. Les moyens de verrouillages permettent de conserver le moule fermé lors de la rotation de la tourelle et pendant le refroidissement de l'objet dans la cavité du moule.

Les moyens de verrouillage se composent d'un verrou et d'un mécanisme d'accumulation d'énergie. Le verrou est par exemple un système à crochet ou un système à expansion ou encore un système à déformation. Le mécanisme d'accumulation d'énergie permet de maintenir une force de fermeture importante entre les deux parties du moule pendant le refroidissement de l'objet. Le mécanisme d'accumulation d'énergie se compose par exemple de ressorts mécaniques, ou de ressorts pneumatiques, ou de ressorts hydrauliques. L'actionnement du verrou peut être fait par un vérin du type pneumatique, hydraulique ou électrique. L'actionnement du verrou est soit fixe soit embarqué sur la tourelle. Préférentiellement, l'actionnement est embarqué sur la tourelle afin de permettre le déverrouillage du moule pendant la rotation de la tourelle.

Dans un mode d'exécution, l'invention se caractérise également par le fait que des moyens de compactage indépendants de l'unité d'injection sont utilisés. Dans l'exposé de l'invention, l'expression "moyens de compactage" désigne les moyens qui exercent une pression sur la résine injectée pendant la phase de refroidissement. La phase de compactage permet notamment d'éviter les retassures dans les objets moulés ou d'améliorer la stabilité dimensionnelle ainsi que la précision des pièces moulées.

Selon un mode d'exécution de l'invention, chaque cavité dispose de moyens de compactage indépendants embarqués sur la tourelle. Ainsi, le nombre de moyens de compactage est égal au nombre total de cavités sur la tourelle, c'est-à-dire au nombre de cavités par moule multiplié par le nombre de moules sur la tourelle. Selon l'invention, le nombre de moyens de compactage par moule est compris entre quatre et trente-deux et préférentiellement entre quatre et seize.

Un avantage de l'invention découle du fait que les moyens de compactage sont embarqués sur la tourelle. Cela permet de maintenir une pression sur la résine injectée pendant tout le refroidissement de l'objet dans le moule. Le fait que les moyens de compactage soient embarqués permet en outre de maintenir la pression sur la résine injectée sans pénaliser la cadence de production.

Les moyens de compactage comprennent au moins une pièce d'outillage mobile débouchant dans la cavité et exerçant une pression sur la résine injectée ainsi qu'un élément de compactage relié à la pièce d'outillage mobile.

Préférentiellement, l'élément de compactage est un élément passif tel un ressort. Selon un mode d'exécution de l'invention, l'élément de compactage accumule de l'énergie lors du remplissage de l'empreinte lorsque la cavité est reliée au pot d'injection (compression du ressort). Une partie de l'énergie accumulée pendant la phase de remplissage est ensuite restituée par l'élément de compactage pendant le refroidissement de l'objet (décompression du ressort par exemple). L'élément passif de compactage peut être un ressort en acier ou un ressort à air ou un élément compressible comme un élastomère ou un autre moyen équivalent.

Selon un autre mode d'exécution, l'élément de compactage est un élément actif tel un vérin. L'élément de compactage actif permet de piloter temporellement la pression de compactage, mais augmente l'inertie embarquée sur la tourelle.

Dans un procédé de surmoulage multi-cavités par injection classique, la phase de compactage est limitée par le temps de figeage du seuil d'injection. Après le figeage du seuil, la pression exercée par l'unité d'injection n'a plus d'effet sur l'objet moulé. De plus, une disparité importante du temps de figeage du seuil est observée entre les empreintes, ce qui a pour effet d'augmenter les variations entre les objets moulés. L'invention permet de remédier à ces difficultés: elle permet d'exercer une pression sur l'objet moulée pendant tout le refroidissement dans le moule, même si le seuil d'injection est figé. La précision dimensionnelle des objets est également améliorée par ce processus.

L'indépendance des moyens de compactage permet d'optimiser dans chaque cavité individuelle la pression exercée pendant la phase de refroidissement. Cela permet notamment d'utiliser des inserts moins précis ou de mouler des pièces de volume différent sans compromettre la qualité des objets obtenus.

L'invention est particulièrement avantageuse pour le surmoulage d'inserts fragiles nécessitant la réduction de la pression sur l'insert pendant l'opération de surmoulage. L'indépendance des moyens de compactage pour chaque cavité permet la réduction et l'ajustement de façon optimale de la pression de compactage sur les inserts surmoulés.

Dans un mode d'exécution, le procédé selon l'invention comprend au moins les opérations successives suivantes ;
- Positionnement des inserts dans le moule
- Contrôle de la présence et de la position des inserts dans chaque cavité
- Fermeture du moule
- Verrouillage et fermeture sous contrainte du moule,
- Début de l'injection
- Fin de l'injection
- Figeage du seuil
- Libération de la fermeture sous contrainte du moule
- Début du compactage
- Refroidissement
- Déverrouillage du moule, fin du compactage
- Ouverture du moule
- Déchargement des objets moulés avec leur insert.

Selon l'invention, les canaux d'alimentation chauds de la matière fondue sont totalement séparés des moules refroidis embarqués sur la tourelle. Dans l'invention, la partie chaude de l'outillage qui permet l'alimentation de la matière fondue dans les cavités du moule est de préférence liée à la station fixe d'injection. La séparation de la partie chaude et de la partie froide de l'outillage permet d'améliorer l'efficacité du refroidissement des moules et de réduire leur masse embarquée. La partie chaude de l'outillage est liée à la station fixe d'injection ; la partie froide de l'outillage est liée à la tourelle et constitue ce qui est appelé moule dans l'invention.

Dans un mode d'exécution, l'invention propose un procédé et dispositif d'injection surmoulage à faible inertie permettant d'atteindre des cadences de production élevées. Selon un mode d'exécution de l'invention, le procédé et le dispositif comprennent des moyens de fermeture sous contrainte du moule qui sont fixes et agissent seulement pendant la phase d'injection de la matière plastique dans le moule et jusqu'au moment du figeage du seuil d'injection. Ces moyens de fermeture sous contrainte garantissent la fermeture et l'étanchéité du moule pendant le remplissage du moule. Selon un mode de réalisation préférentiel, chaque cavité du moule comporte des moyens de fermeture sous contrainte indépendants.

Selon un mode d'exécution de l'invention, le procédé et dispositif d'injection-surmoulage permettent le compactage de la matière injectée pendant le refroidissement de la pièce moulée dans les cavités. Selon un mode d'exécution de l'invention, le procédé et le dispositif comprennent des moyens de verrouillage et déverrouillage du moule ainsi que des moyens de compactage embarqués sur la tourelle. Selon un mode d'exécution de l'invention, chaque moule dispose de moyens indépendants de verrouillage et chaque cavité dispose de moyens de compactage indépendants. Selon un mode de réalisation préférentiel les moyens de compactage sont passifs.

La présente invention permet l'ouverture et la fermeture du moule pendant la rotation de la tourelle afin d'optimiser le temps de cycle. Selon un mode d'exécution de l'invention, le procédé et le dispositif comportent des moyens d'ouverture et fermeture embarqués sur la tourelle. Ces moyens sont peu encombrants et rapides du fait de la faible masse des moules.

L'invention permet de réduire la complexité des opérations robotiques. Ces opérations robotiques sont utiles notamment sur la station de chargement des inserts pour positionner simultanément plusieurs inserts dans le moule. Le procédé d'injection surmoulage proposé permet de réduire d'un facteur 4 à 10 le nombre d'insert manipulés simultanément par rapport à un procédé d'injection conventionnel ayant le même nombre de cavité. A cela s'ajoute le fait que le moule arrive ouvert depuis la station de déchargement ce qui permet de disposer des moyens d'insertion fixes entre la partie supérieure et inférieure du moule. Selon un mode de réalisation préférentiel de l'invention, la partie supérieure ou inférieure du moule conjugue un mouvement perpendiculaire au mouvement d'ouverture afin de dégager la partie supérieure de la partie inférieure et faciliter les manipulations dans le moule. Ce mouvement perpendiculaire préférentiellement selon l'axe radial de la tourelle permet la manipulation d'inserts encombrants et facilite les opérations optionnelles de contrôle, d'assemblage, de soudage ou d'impression dans le moule. Les opérations de déchargement des objets sont également grandement facilitées.

L'invention permet l'ajout optionnel d'autres stations fixes autour de la tourelle rotative indexée. L'invention permet par exemple l'ajout d'une station pour contrôler la présence et la position d'un insert dans chaque cavité. D'autres stations peuvent être ajoutées comme par exemple des stations d'impression, d'assemblage, de contrôle dimensionnel ou de soudage.

Dans un mode d'exécution, l'invention concerne un dispositif de surmoulage par injection comprenant au moins une tourelle rotative indexée sur laquelle sont embarqués des moules refroidis, chaque moule comprenant une pluralité de cavités, et au moins cinq stations fixes disposées autour de ladite tourelle, parmi lesquelles stations au moins une première station), une deuxième station et une troisième station, ces stations étant utilisées, respectivement, pour effectuer les opérations de positionnement des inserts dans les cavités du moule, d'injection de la matière plastique dans les cavités du moule, et de démoulage des objets au moins partiellement refroidis, le dispositif comprenant pour chaque cavité des moyens d'injection indépendants.

Dans un mode d'exécution, chaque cavité dispose d'un moyen de fermeture sous contrainte fixe et indépendant permettant de mettre en pression de façon directe les cavités pendant le remplissage desdites cavités.

Dans un mode d'exécution, chaque cavité dispose de moyens de compactage indépendants embarqués sur la tourelle.

Dans un mode d'exécution, les moyens de compactage sont des moyens actifs ou des moyens passifs.

Dans un mode d'exécution, chaque cavité dispose de moyens de verrouillage indépendants embarqués sur la tourelle.

Dans un mode d'exécution, une première station pour effectuer les opérations de positionnement des inserts dans les cavités du moule comprend des moyens de positionnement pour placer les inserts dans les cavités.

Dans un mode d'exécution, une deuxième station d'injection de la matière plastique dans les cavités du moule comprend les moyens d'injection indépendants pour remplir les cavités.

Dans un mode d'exécution, une troisième station comprend des moyens de déchargement.

Dans un mode d'exécution, les stations restantes sont utilisées pour augmenter le temps de refroidissement, ou pour effectuer des opérations de contrôles, ou pour réaliser des opérations d'actionnement des moules, ou encore pour effectuer des opérations sur les inserts et/ou sur les objets moulés.

Dans un mode d'exécution, la tourelle comprend un nombre de station compris entre cinq et huit.

Dans un mode d'exécution, le nombre de moules disposés sur la tourelle est égal au nombre de stations.

Dans un mode d'exécution, le nombre de moules multi-cavités disposés sur la tourelle est au moins de cinq, et est préférentiellement compris entre cinq et huit.

Dans un mode d'exécution, l'invention concerne un procédé de surmoulage par injection réalisé sur une tourelle rotative indexée et comportant au moins les opérations successives suivantes
- Positionnement d'inserts dans les cavités du moule
- Fermeture du moule
- Verrouillage du moule, fermeture sous contrainte des cavités du moule de façon individuelle,
- Début de l'injection dans chaque cavité de façon individuelle;
- Fin de l'injection
- Figeage du seuil
- Libération de la fermeture sous contrainte du moule
- Début du compactage
- Refroidissement
- Déverrouillage du moule, fin du compactage
- Ouverture du moule
- Déchargement des objets moulés.

Dans un mode d'exécution, les opérations de fermeture et d'ouverture du moule, de compactage, de refroidissement et de déverrouillage sont effectuées pendant la rotation de la tourelle.

Dans un mode d'exécution, le mouvement d'ouverture et de fermeture du moule comprend un mouvement de translation radial par rapport à l'axe de la tourelle pour décaler deux parties du moule.

Dans un mode d'exécution, les inserts sont du même type ou d'un type différent.

Dans un mode d'exécution, les inserts sont bloqués par des moyens de blocage dans la cavité du moule une fois positionnés.

Dans un mode d'exécution, la présence et la position des inserts est contrôlée avant la fermeture du moule.

Dans un mode d'exécution, la fermeture sous contrainte du moule est effectuée par des moyens fixes lorsque le moule est dans la station d'injection.

Dans un mode d'exécution, chaque cavité dispose de moyens de fermeture sous contrainte.

Dans un mode d'exécution, l'injection se fait sans carotte d'alimentation.

Dans un mode d'exécution, lors du déchargement, un contrôle est effectué sur les objets moulés.

Dans un mode d'exécution, le contrôle est un contrôle de qualité, ou de dimension, ou esthétique ou une combinaison.

Dans un mode d'exécution, le contrôle est optique.

### BREVE DESCRIPTION DES DESSINS

La présente invention sera mieux comprise grâce à la description de modes d'exécution de celle-ci et des figures dans lesquelles
La figure 1 illustre un schéma de principe du procédé et dispositif de surmoulage par injection comprenant une tourelle rotative indexée;
La figure 2 illustre le principe du remplissage indépendant des cavités vu de côté en coupe;
La figure 3 illustre une vue en coupe partielle de côté du moule embarqué sur la tourelle;
La figure 4 illustre la vue en coupe partielle de côté d'un moule pour la réalisation d'objets sans carotte d'injection.

### DESCRIPTION DETAILLEE

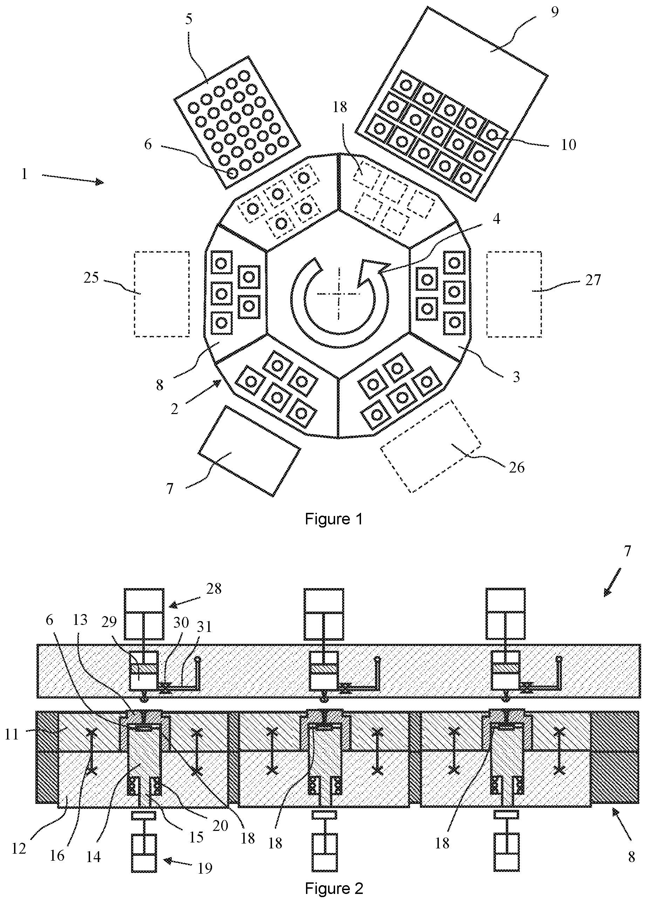

La figure 1 illustre un exemple de réalisation de l'invention vu de dessus. Une tourelle 2 qui est divisée en plusieurs secteurs 3, est animée d'un mouvement de rotation indexé 4. Sur chaque secteur est fixé un moule 8 comportant plusieurs cavités 18. Des stations fixes 5, 25, 7, 26, 27 et 9 sont disposées autour de la tourelle 2 et effectuent des opérations dans les moules 8 lors de la phase d'arrêt de la tourelle au regard desdites stations. Le procédé et dispositif de surmoulage illustré figure 1 permet la fabrication à grande cadence d'objets surmoulés.

Le dispositif de surmoulage 1 illustré figure 1 comporte six stations fixes (5, 25, 7, 26, 27, et 9) interagissant avec six moules 8 disposés sur une tourelle indexée 2. Chaque moule 8 comprend cinq cavités 18. La station de chargement des inserts 5 permet de positionner les inserts 6 dans les cavités du moule 8. La station suivante 25 est utilisée pour contrôler la position des inserts 6 dans les cavités 18 et fermer le moule 8. La station successive 7 sert à injecter de la matière plastique dans les cavités 18 du moule 8. Les deux stations suivantes 26 et 27 sont utilisées pour refroidir et compacter les objets moulés 10 et/ou effectuer des opérations de contrôle. Finalement, la dernière station 9 permet de démouler les objets moulés 10. Selon un mode de réalisation préférentiel, la tourelle comprend un nombre de station compris entre cinq et huit. Des stations supplémentaires après la station de remplissage 7 peuvent permettre, par exemple, d'augmenter le temps de refroidissement des objets 10, ou d'effectuer des opérations de contrôle des objets 10, ou de réaliser des opérations sur les objets moulés comme par exemple des opérations d'assemblage ou d'impression ou autre. Comme on le comprendra, le dispositif selon l'invention est donc modulable.

Afin de permettre la production de pièces surmoulées à grande cadence, les moules 8 disposés sur la tourelle comportent plusieurs cavités 18. Selon l'invention le nombre de cavités par moule est compris entre quatre et trente-deux et préférentiellement entre quatre et seize. Le nombre maximal de cavités 18 par moule 8 découle de la complexité de la manipulation et du surmoulage d'un nombre d'insert 6 élevé.

Dans un mode d'exécution, le cycle de surmoulage illustré figure 1 comporte les opérations successives suivantes ;
- Positionnement des inserts 6 dans les cavité 18 du moule 8 (station 5)
- Indexage, c'est-à-dire rotation de la tourelle d'un angle correspondant à un secteur
- Contrôle de la position de chaque insert 6 dans les cavités 18 (station 25)
- Fermeture du moule 8 (station 25)
- Indexage
- Verrouillage et fermeture sous contrainte du moule 8 (station 7)
- Remplissage indépendant de chaque cavité 18 (station 7)
- Figeage du seuil puis libération de la fermeture sous contrainte du moule 8 (station 7)
- Indexage avec refroidissement et compactage
- Refroidissement et compactage (station 26)
- Indexage avec refroidissement et compactage
- Refroidissement et compactage (station 27)
- Indexage avec déverrouillage du moule et ouverture du moule
- Déchargement des objets moulés 10 avec leur insert (station 9)
- Indexage du moule 8 ouvert

Une première caractéristique selon un mode d'exécution de l'invention illustré en figure 2 se situe au niveau de la station 7 et réside dans le fait que le nombre de pots d'injection 29 est égal au nombre de cavités 18 par moule 8. Cela signifie que pendant la phase d'injection, chaque cavité du moule 18 est reliée à un pot d'injection 29 indépendant. Ce mode de réalisation permet de remplir chaque cavité 18 indépendamment des cavités 18 adjacentes. Le mode de remplissage proposé est particulièrement avantageux pour le surmoulage d'inserts 6 à grande cadence de production.

Le remplissage de chaque cavité 18 de façon indépendante permet de pallier les inconvénients du surmoulage d'inserts 6 dans un moule multi-cavités comme expliqué ci-dessus et ci-après.

L'invention permet de remédier aux inconvénients liés à l'absence d'un insert 6 dans l'une des cavités 18 au moment du remplissage sur la station 7. Notamment, si un insert 6 est absent de l'une des cavités 18 au moment de l'injection, la cavité sans insert n'est pas remplie sans que cela ait une influence sur la qualité des pièces 10 produites dans les autres cavités. Dans un système d'injection classique où toutes les cavités sont remplies simultanément depuis un seul pot d'injection, l'absence d'un insert de l'une des cavités a pour conséquence la production de pièces défectueuses car le remplissage des empreintes ne se fait plus de façon équilibrée. De plus, dans un système d'injection classique, le remplissage déséquilibré des empreintes engendre souvent des difficultés à l'éjection des pièces ce qui souvent provoque des arrêts de la production afin de sortir manuellement du moule les pièces incomplètes. L'invention permet de remédier à cette perte de productivité.

Selon l'invention, un dispositif de détection de la présence et de la position des inserts 6 dans les cavités 18 du moule 8 permet de définir les cavités 18 à remplir lors de l'opération d'injection. Ce dispositif de détection effectue l'opération de contrôle, après le positionnement des inserts et avant la fermeture du moule. Dans un mode d'exécution illustré en figure 1, on ajoute une station 25 entre la station 5 de chargement des inserts et la station 7 de remplissage des cavités pour effectuer cette opération de contrôle de la présence et de la position des inserts 6. Une solution alternative est d'effectuer l'opération de contrôle des inserts pendant l'indexage de la tourelle entre les stations 5 et 7 sans avoir de station intermédiaire 25. De préférence le système de détection est un dispositif visuel (optique, caméra ou autre équivalent) couplé à un module d'analyse d'image, par exemple installé sur un ordinateur. Selon l'invention, ce module de détection couplé au remplissage indépendant des cavités permet le remplissage uniquement des cavités dans lesquelles un insert 6 est présent et correctement positionné. Un avantage de l'invention, réside dans le fait que les opérations étant réalisée sur un système rotatif indexé, l'opération de détection peut notamment être faite en temps masqué sans que cela affecte la cadence de production de la machine.

Un autre avantage du remplissage indépendant des cavités est de permettre l'utilisation d'inserts 6 moins précis au niveau dimensionnel. Les variations dimensionnelles des inserts peuvent influencer le volume occupé par chaque insert 6 dans la cavité du moule 8. Il en résulte un volume variable de résine injecté dans chaque empreinte 18. Lorsque les variations dimensionnelles des inserts ne sont pas négligeables par rapport au volume de matière injecté, il en résulte dans un système d'injection multi-cavités classique un remplissage déséquilibré des empreintes 18 et par conséquent des variations dimensionnelles importantes sur les objets moulés 10 ou l'apparition de bavures sur les objets moulés 10. L'invention, grâce au remplissage indépendant des cavités 18, permet l'usage d'inserts peu précis tout en conservant une grande précision au niveau de la partie moulée de l'objet 10. L'utilisation d'inserts 6 moins précis permet dans certains cas de réduire le coût des pièces produites 10. L'invention permet de remédier aux problèmes de bavures sur les objets moulés et ainsi diminuer le taux de rebut.

Un autre avantage du remplissage indépendant des cavités est lié au rejet des inserts 6 mal positionnés dans la cavité 18 du moule 8. L'injection indépendante des cavités 18 couplé au système de contrôle de la position de chaque insert dans la cavité du moule permet de ne pas remplir les cavités dans lesquelles le positionnement de l'insert est hors tolérance. La solution alternative utilisée dans les systèmes classiques consiste à injecter la résine dans toutes les cavités et à éjecter ensuite les pièces défectueuses. Cette méthode génère des déchets importants qui par nature sont difficile à recycler. L'invention permet de s'affranchir de cet inconvénient. Dans de nombreux cas les inserts 6 éjectés peuvent être réutilisés, sinon leur recyclage est facilité car l'opération de surmoulage n'a pas eu lieu.

Un autre avantage du remplissage indépendant des cavités 18 est lié à la flexibilité apportée par cette méthode d'injection. L'invention permet par exemple de réaliser dans un même moule 8 des pièces objets moulés 10 de masse différente. Le volume de matière injecté dans chaque cavité étant géré de façon indépendante pour chaque pot, la précision du volume injecté est améliorée. Ceci peut avoir une importance par exemple lorsque des inserts différents sont positionnés.

La meilleure gestion du volume de matière injecté dans chaque cavité permet également de diminuer les efforts de fermeture du moule. La force de fermeture exercée par les moyens de fermeture sous contrainte 19 est par conséquent diminuée. Il en résulte un dimensionnement réduit des moules et par conséquent de la masse embarquée sur la tourelle plus faible ce qui permet de produire à une cadence plus élevée. Un avantage qui en découle est la réduction de l'énergie nécessaire à la production desdits objets.

L'utilisation d'un pot d'injection par cavité 19 permet également de réduire l'encombrement du moule car la disposition des empreintes dans le moule peut être optimisée. La liberté du nombre d'empreinte et de leur position dans le moule est particulièrement utile pour faciliter d'autres opérations telles que le positionnement des inserts ou la décharge des objets.

Un autre avantage du remplissage indépendant des cavités 18 est lié à la possibilité de supprimer les carottes d'injection dans les pièces surmoulées sur des systèmes rotatifs indexés.

L'invention est particulièrement avantageuse pour le surmoulage d'inserts 6 fragiles nécessitant de l'usage de faibles pression et température de la résine injectée lors du remplissage des cavités 8. Le remplissage indépendant des cavités permet la réduction de façon optimale des température et pression d'injection.

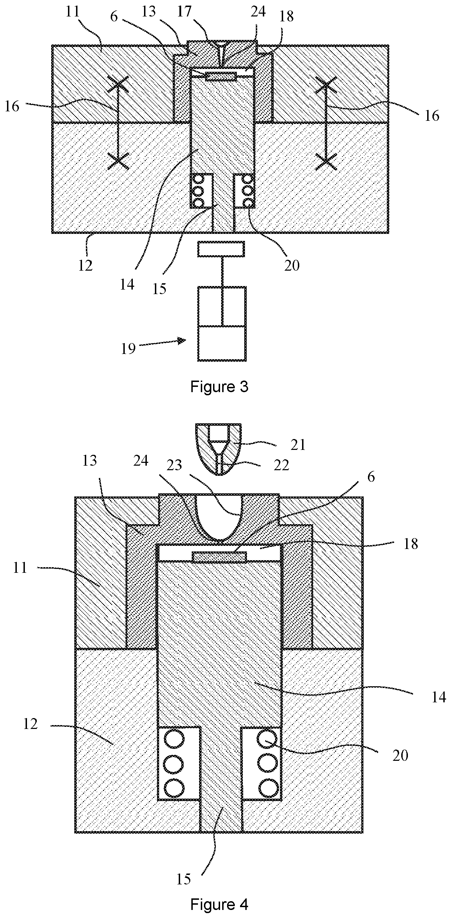

Un autre avantage du dispositif de surmoulage proposé est lié à la faible distance reliant l'extrémité du chaque pot d'injection à la buse d'injection 21 illustrée figure 4 qui vient en contact avec la matrice de moule 13. La faible longueur du canal chaud reliant le pot d'injection à la buse d'injection 21 permet de réduire le temps de séjour de la matière fondue à température élevée et limite les risque de dégradation liés à la température ce qui rend ces dispositifs avantageux pour la transformation de matières plastiques sensibles.

Le mode d'exécution du dispositif de surmoulage illustré en figure 2 comprend la station 7 de remplissage des cavités 18. Cette station 7 dispose de moyens de fermeture sous contrainte du moule 8, ainsi que des moyens d'injection 28, 29 pour remplir indépendamment les cavités 18 des moules 8 dans lesquels les inserts 6 ont été positionnés. Lors de l'arrêt du moule 8 au regard de la station d'injection 7, les opérations suivantes sont effectuées :
- Fermeture sous contrainte du moule, verrouillage du moule et début du remplissage des empreintes 18,
- Fin du remplissage,
- Figeage du seuil,
- Libération de la fermeture sous contrainte du moule.

La station d'injection 7 illustrée figure 2 comporte un pot d'injection 29 par cavité 18 de moule 8. Chaque pot d'injection 29 dispose de moyens d'injection 28 qui permettent d'injecter la matière fondue dans la cavité 18. Ces moyens d'injection 28 peuvent être électriques, pneumatiques ou hydrauliques. Chaque pot d'injection 29 est également relié à une extrudeuse par l'intermédiaire d'un canal chaud 31 et d'un clapet ou électrovanne 30. Le rôle du clapet 30 est de permettre l'écoulement de la matière fondue depuis l'extrudeuse vers le pot d'injection pour remplir ledit pot d'injection 29 lors de la rotation de la tourelle 2, et d'empêcher l'écoulement de la matière fondue depuis le pot d'injection vers l'extrudeuse pendant la phase d'injection.

La figure 3 illustre la configuration d'une partie du moule 8 au moment du passage du moule devant la station d'injection surmoulage 7. Au moment de l'arrivée du moule sur la station d'injection 7, le bloc matrice 11 formant la partie supérieure du moule et le bloc poinçon 12 formant la partie inférieure du moule sont en position fermée ou presque fermée car la fermeture sous contrainte du bloc matrice 11 contre le bloc poinçon 12 n'a pas été effectuée. La fermeture sous contrainte est nécessaire pour contrer la force d'ouverture du moule pendant le remplissage de la cavité 18. Cet effort d'ouverture conséquent est maximal lorsque la cavité 18 du moule est en fin de remplissage.

Selon un mode d'exécution de l'invention, le procédé et dispositif comprennent des moyens de fermeture sous contrainte du moule 8 qui sont fixes et agissent sur le moule 8 lorsque celui-ci est à l'arrêt devant la station d'injection 7. Selon un mode préférentiel de réalisation de l'invention illustré figure 2 et figure 3, chaque cavité 18 dispose d'un moyen de fermeture sous contrainte 19 fixe et indépendant qui n'est pas lié à la tourelle 2. Comme illustré en figure 2, la fermeture sous contrainte de la cavité 18 est réalisée par la mise sous contrainte conjointe du bloc poinçon 12 contre le bloc matrice 11. Avantageusement, les moyens de fermeture sous contrainte 19 exercent conjointement une pression sur la queue de poinçon 15 reliée au poinçon 14. Cette action vient mettre en pression de façon directe la matière contenue dans la cavité 18 formée entre le poinçon 14 et la matrice 13. Les moyens de fermeture sous contrainte 19 sont par exemple des vérins électriques, pneumatiques ou hydrauliques ou une combinaison.

Conjointement à sa fermeture sous contrainte, le moule 8 est verrouillé. Cette opération est illustrée par les moyens de verrouillage 16 illustrés en figure 3. Dans un mode d'exécution, l'invention se caractérise également par le fait que chaque moule 8 dispose de moyens de verrouillage 16 indépendants. L'indépendance des moyens de verrouillage 16 permet de réaliser le refroidissement et le compactage des objets 8 en dehors de la station d'injection 7. Ce mode d'exécution est particulièrement avantageux car il permet d'optimiser le temps de cycle et d'atteindre des cadences de production élevées.

Avantageusement, ces moyens de verrouillage et déverrouillage 16 sont embarqués sur la tourelle 2, afin de permettre l'ouverture du moule pendant la rotation de la tourelle 2.

Les moyens de verrouillage 16 permettent de conserver le moule fermé après la libération des moyens de fermeture sous contrainte 19 et lors de la rotation de la tourelle et du refroidissement de l'objet dans la cavité 18 du moule.

Les moyens de verrouillage 8 se composent d'un verrou et d'un mécanisme d'accumulation d'énergie. Le verrou est par exemple un système à crochet ou un système à expansion ou encore un système à déformation. Le mécanisme d'accumulation d'énergie permet de maintenir une force de fermeture importante entre les deux parties du moule pendant le refroidissement de l'objet. Le mécanisme d'accumulation d'énergie se compose par exemple de ressorts mécaniques, ou de ressorts pneumatiques, ou de ressorts hydrauliques. L'actionnement du verrou peut être fait par un vérin du type pneumatique, hydraulique ou électrique. L'actionnement du verrou est soit fixe soit embarqué sur la tourelle. Préférentiellement, l'actionnement est embarqué sur la tourelle afin de permettre le déverrouillage du moule pendant la rotation de la tourelle.

Conjointement à la fermeture sous contrainte du moule et au verrouillage du moule 8, l'injection de la matière fondue dans le moule est initiée. Le démarrage simultané de l'injection est rendu possible du fait de la montée progressive de la pression dans la cavité du moule et de la fermeture sous contrainte quasi instantanée de la cavité grâce aux moyens de fermeture sous contrainte 19. Pendant le remplissage des cavités 18, les moyens de fermeture sous contrainte 19 s'opposent à l'ouverture du moule 8 et assurent l'étanchéité entre les moules et les buses d'injection 21 venant s'accoupler aux matrices 13. Lorsque l'objet est suffisamment refroidi, les moyens de verrouillage 16 déverrouillent chaque cavité du moule; les moyens d'ouverture viennent ensuite ouvrir rapidement le moule, ce mouvement d'ouverture pouvant comprendre un décalage radial du bloc matrice ou du bloc poinçon afin de faciliter l'accès aux objets contenus dans le moule. Comme l'ensemble de ces moyens sont embarqués sur la tourelle 2, l'ensemble de ces opérations peuvent être effectuées lors de la rotation de la tourelle 2. Les moyens d'ouverture sont par exemple des vérins pneumatiques, des vérins électriques ou encore des vérins hydrauliques.

Une fois que la cavité 18 est remplie, l'objet commence à refroidir car le bloc poinçon 12, le poinçon 14, le bloc matrice 11 et la matrice 13 formant le moule sont refroidis. Il en résulte le figeage du seuil d'injection 24 séparant l'objet moulé du canal d'alimentation. La taille du seuil d'alimentation 24 a une grande influence sur la cadence de production du dispositif de surmoulage 1. En effet, avant le figeage du seuil 24, il est nécessaire de maintenir la pression d'injection dans la cavité 18, ce qui interdit la rotation de la tourelle 2 et par conséquent augmente le temps de cycle. Il est donc d'un grand intérêt d'avoir un figeage du seuil rapide après le remplissage de l'empreinte 18. Pour permettre le figeage rapide du seuil, il a été trouvé que le diamètre du seuil doit être compris entre 0.3 et 0.8mm et préférentiellement entre 0.4 et 0.6mm. Il est important de souligner que la buse d'injection 21 qui constitue l'extrémité du bloc chaud vient en contact avec la matrice 13 refroidie. L'optimisation du temps de contact entre la partie froide et la partie chaude est nécessaire pour figer le seuil 24 situé dans la matrice tout en évitant la formation d'une goutte froide dans la buse 21 au niveau de son extrémité 22. Le dimensionnement du canal d'alimentation 22 de la buse 21 est important pour éviter la formation de goutte froide.

Lorsque le seuil est figé, la pression exercée sur le moule par les moyens de fermeture sous contrainte 19 est relâchée. Les vérins de fermeture sous contrainte libèrent le porte poinçon et 12 et la queue de poinçon 15. Le relâchement de la fermeture sous contrainte de l'outillage provoque également la séparation des buses d'injection 21 et des matrices13. Le moule 5 devient alors déconnecté de la station 7 d'injection ce qui autorise la rotation de la tourelle 2.

Une difficulté inhérente aux dispositifs de moulage rotatifs réside dans la réduction des carottes d'alimentation 17 qui doivent être séparées de l'objet et recyclées. Un avantage de l'invention est de permettre la réduction du volume de ces carottes 17.

Selon un mode préférentiel de réalisation illustré figure 4, l'injection se fait sans carotte 17. La buse d'injection 21 reliée au bloc chaud vient en contact avec le reçu de buse 23 de la matrice 13. Le reçu de buse 23 est relié à la cavité par l'intermédiaire du seuil 24. La géométrie du seuil 24 est conique avec une partie cylindrique située du côté du reçu de buse et formant la plus petite section d'écoulement. L'optimisation de l'embout 22 de buse d'injection 21 et du reçu de buse 23 permet d'obtenir une étanchéité entre la partie chaude et la partie froide du dispositif d'injection.

Ensuite on refroidit les objets 10 dans le moule 8. La figure 1 illustre un dispositif comprenant deux stations de refroidissement 26 et 27. Lorsque l'objet se refroidit dans la cavité du moule, il s'opère une diminution du volume de l'objet du fait du changement d'état et de la diminution de la température de la matière. Afin d'éviter que la diminution de volume provoque des défauts dans l'objet, il est donc nécessaire de continuer à exercer une pression sur la matière contenue dans la cavité du moule.

Dans un mode d'exécution, les moyens de compactage 20 sont indépendants de l'unité d'injection 7. La phase de compactage permet notamment d'éviter les retassures dans les objets moulés 10 ou d'améliorer la stabilité dimensionnelle ainsi que la précision desdits objets moulés 10.

Selon un mode d'exécution de l'invention, de préférence, chaque cavité 18 dispose de moyens de compactage 20 indépendants embarqués sur la tourelle. Ainsi, le nombre de moyens de compactage 20 est égal au nombre total de cavité 18 sur la tourelle 2, c'est-à-dire au nombre de cavité par moule multiplié par le nombre de moule sur la tourelle. Selon l'invention, le nombre de moyens de compactage 20 par moule 8 est compris entre quatre et trente-deux et préférentiellement entre quatre et seize.

Un avantage de l'invention est lié au fait que les moyens de compactage 20 sont embarqués sur la tourelle 2. Cela permet de maintenir une pression sur la résine injectée pendant tout le refroidissement de l'objet dans le moule. Le fait que les moyens de compactage 20 soient embarqués permet de maintenir la pression sur la résine injectée sans pénaliser la cadence de production.

Selon un mode d'exécution de l'invention, chaque cavité 18 dispose de moyens de compactage 20 indépendants. Ces moyens de compactage 20 se composent au moins d'une pièce d'outillage mobile débouchant dans la cavité et exerçant une pression sur la résine injectée ainsi que d'un élément de compactage relié à la pièce d'outillage mobile.

Préférentiellement, l'élément de compactage est un élément passif tel un ressort. Selon notre invention, l'élément de compactage accumule de l'énergie lors du remplissage de l'empreinte lorsque la cavité est reliée au pot d'injection (compression du ressort). Une partie de l'énergie accumulée pendant la phase de remplissage est ensuite restituée par l'élément de compactage pendant le refroidissement de l'objet (décompression du ressort). L'élément passif de compactage peut être un ressort en acier ou un ressort à air.

Selon une méthode alternative, l'élément de compactage est un élément actif tel un vérin. L'élément de compactage actif permet de piloter temporellement la pression de compactage, mais augmente l'inertie embarquée sur la tourelle.

Un autre avantage de l'invention est lié au fait que la phase de compactage n'est plus limitée par le temps de figeage du seuil d'injection 24 comme c'est le cas avec les dispositifs de l'art antérieur. Avec ces dispositifs de l'art antérieur, il est observé une disparité importante du temps de figeage du seuil 24 de chaque empreintes 18, ce qui a pour effet de créer des variations entre les objets moulés 10. L'invention permet de remédier à ces difficultés. L'invention permet d'exercer une pression de compactage sur l'objet moulé 10 pendant le refroidissement dudit objet, et après le figeage du seuil d'injection 24. Il en résulte une précision dimensionnelle améliorée des objets 5, ainsi qu'une disparité moins importante entre les objets 10 issus de cavités 18 différentes.

L'indépendance des moyens de compactage 20 permet d'optimiser pour chaque cavité 18 la pression exercée pendant la phase de refroidissement. Cela permet notamment d'utiliser des inserts 6 moins précis ou de mouler des objets 10 de volume différent sans compromettre la qualité desdits objets obtenus.

L'invention est particulièrement avantageuse pour le surmoulage d'inserts 6 fragiles nécessitant la réduction de la pression sur l'insert 6 pendant l'opération de surmoulage. L'indépendance des moyens de compactage 20 pour chaque cavité 18 permet la réduction de façon optimale de la pression de compactage sur les inserts surmoulés 6.

La figure 3 illustre une vue partielle du moule 8 embarqué sur la tourelle. Le moule 8 comporte pour chaque cavité 18 des moyens de compactage 20 sous forme de ressort permettant de comprimer la matière contenue dans la cavité 18. Selon le mode de réalisation préférentiel, chaque cavité 18 dispose de moyens passifs de compactage 20 ce qui permet, si nécessaire, la réalisation de pièces différentes dans chaque cavité.

La présente invention permet l'ouverture et la fermeture du moule 8 pendant la rotation de la tourelle 2 afin d'optimiser le temps de cycle. Selon un mode d'exécution, le dispositif comporte des moyens d'ouverture et fermeture embarqués sur la tourelle 2. Ces moyens sont peu encombrants et rapides du fait de la faible masse des moules 8.

Successivement au positionnement des inserts 6 dans les cavités 8, le moule 5 est fermé. L'opération de fermeture peut être faite à l'arrêt ou lors de la rotation de la tourelle. Avantageusement cette opération est réalisée en temps masqué lors de la rotation de la tourelle 2 grâce aux moyens d'ouverture et de fermeture embarqués sur la tourelle 2. L'opération de fermeture ne nécessite pas d'effort important du fait de la faible masse du moule 5. Chaque moule 5 dispose de moyens d'ouverture et fermeture indépendants et rapides. Ces moyens sont par exemple de type mécanique, pneumatique ou encore hydraulique, ou en combinaison.

L'invention permet de réduire la complexité des opérations robotiques. Ces opérations robotiques sont utiles notamment sur la station de chargement des inserts 6 pour positionner simultanément plusieurs inserts 6 dans le moule 8. Le procédé d'injection surmoulage proposé permet de réduire d'un facteur 4 à 10 le nombre d'insert 6 manipulés simultanément par rapport à un procédé d'injection conventionnel ayant le même nombre de cavité. A cela s'ajoute le fait que le moule 8 arrive ouvert depuis la station de déchargement 9 ce qui permet de disposer des moyens d'insertion fixes entre la partie supérieure et inférieure du moule 8. Selon un mode préférentiel de l'invention, la partie supérieure ou inférieure du moule 8 conjugue un mouvement perpendiculaire au mouvement d'ouverture afin de dégager la partie supérieure de la partie inférieure et faciliter les manipulations dans le moule. Ce mouvement perpendiculaire préférentiellement selon l'axe radial de la tourelle 2 permet la manipulation d'inserts 6 encombrants et facilite les opérations optionnelles de contrôle, d'assemblage, de soudage ou d'impression dans le moule 8. Les opérations de déchargement des objets 10 sont également grandement facilitées.

Le procédé de surmoulage comporte au moins une première étape de positionnement des inserts 6 dans les cavités 18 du moule. Le transfert des inserts 6 dans les cavités 18 est réalisé grâce à une première station 5 équipée de moyens de positionnement. Les moyens de positionnement sont d'une grande diversité et dépendent du type d'insert, de sa forme et de sa taille. Il existe des moyens robotiques qui permettent, grâce à la combinaison de mouvements de translation et de rotation, de déplacer des objets d'un point A à un point B. Ces moyens robotiques qui sont utilisés fréquemment en injection conventionnelle pour charger ou décharger des objets dans des moules multi-empreintes peuvent être également utilisés dans le cadre de l'invention. Cependant, il est d'un grand intérêt d'utiliser des moyens robotiques de moindre complexité en réduisant le nombre de mouvement de translation et de rotation pour positionner les inserts 6 dans les cavités 18 des moules 8.

Le procédé rotatif indexé illustré figure 1 rend possible la simplification des moyens de positionnement car un nombre réduit d'inserts est manipulé simultanément pour une cadence de production identique. Par exemple, dans un moule d'injection conventionnelle comportant 48 cavités, les moyens de positionnement des inserts doivent gérer 48 inserts simultanément. Avec une tourelle 1 comportant 6 secteurs, seuls 8 inserts au lieu de 48 sont positionnés simultanément. Un autre facteur de simplification des moyens de positionnement des inserts 6 est lié au fait que le moule 8 arrive en position ouverte à la station 5 de chargement des inserts 6. Il est de ce fait souvent possible de positionner les moyens de manutention dans l'espace formé par l'ouverture du moule 8.

Selon un mode de réalisation préférentiel de l'invention, le mouvement d'ouverture du moule comprend également un mouvement de translation radial par rapport à l'axe de la tourelle qui a pour effet de décaler la partie supérieure et la partie inférieure du moule. L'accès aux cavités 18 pour le chargement des inserts est ainsi facilité. Des moyens de chargement plus simples peuvent ainsi être utilisés.

L'invention facilite le surmoulage d'étiquette ou de film fonctionnel. Selon les méthodes habituelles de surmoulage, une première étape est de découper les étiquettes dans un film puis à les conditionner en paquets, éventuellement les stocker. Pour la fabrication des objets surmoulés, les étiquettes sont transférées sur l'ilot d'injection. Un robot vient ensuite manipuler les étiquettes pour les positionner de façon précise dans des moules multi cavités. Un mode préférentiel de réalisation de l'invention pour ce type d'objet, est de découper et positionner le film directement dans le moule d'injection 8. Selon ce mode préférentiel, les moyens de positionnement de l'insert dans le moule comprennent une première étape de déroulement du film, une deuxième étape d'étampage et positionnement des étiquettes et une troisième étape d'enroulement du résidu de film. Selon l'invention, l'opération d'étampage et positionnement de l'étiquette se fait directement dans les cavités 18 des moules 8. Le décalage axial de la partie supérieure et inférieure du moule facilite cette opération d'étampage et positionnement. Cette opération de découpe d'étiquette réalisée directement dans le moule permet de garantir une grande précision de positionnement des étiquettes dans chaque cavité et simplifie les opérations robotiques.

Le dispositif illustré sur la figure 1 comprend une seule station 5 de chargement des inserts 6. Pour des objets nécessitant plusieurs inserts, il peut être avantageux de disposer d'une ou plusieurs stations supplémentaires de positionnement, surtout lorsque les inserts sont de forme et géométrie différentes. Ainsi, une première station sera utilisée pour positionner un premier type d'inserts et une seconde station pour un second type d'inserts. Ce principe peut bien entendu se répéter si des types d'inserts supplémentaires doivent être positionnés.

Les moules 8 comprennent avantageusement des moyens de blocage des inserts dans la cavité du moule, pendant la fermeture desdits moules, pendant la rotation de la tourelle et pendant l'injection de la matière fondue. Ces moyens de blocage peuvent être créés par des tolérances dimensionnelles adaptées entre l'objet et l'empreinte, ou par des moyens d'aspiration, ou par des moyens mécaniques, ou par des moyens électrostatiques ou encore par des moyens magnétiques ou d'autres moyens équivalents. Les moyens de blocage sont choisis en fonction de la nature de l'insert et des forces de blocage nécessaires.

Le dispositif de surmoulage par injection illustré figure 1 comprend au moins la station de déchargement 9 qui dispose de moyens pour extraire les objets 10 du moule 8 et les positionner sur un convoyeur ou sur un autre dispositif. Les moyens de déchargement sont d'une grande diversité et dépendent du type d'objet, de sa forme et de sa taille. Il existe des moyens robotiques qui permettent, grâce à la combinaison de mouvements de translation à de rotation, de déplacer des objets d'un point A à un point B. Ces moyens robotiques qui sont utilisés fréquemment en injection conventionnelle pour charger ou décharger des objets dans des moules multi-empreintes peuvent être également utilisés dans le cadre de l'invention. Cependant, il est d'un grand intérêt d'utiliser des moyens robotiques de moindre complexité en réduisant le nombre de mouvement de translation et de rotation pour décharger les objets 10. Le procédé et dispositif 1 rend possible la simplification des moyens de déchargement car un nombre réduit d'objet est manipulé simultanément pour une cadence de production identique. Un autre facteur de simplification des moyens de déchargement des objets est lié au fait que le moule 8 peut arriver en position ouverte à la station 9 de déchargement des objets. Il est de ce fait souvent possible de positionner les moyens de manutention dans l'espace formé par l'ouverture du moule 8. Lorsque le mouvement d'ouverture du moule 8 comprend également un mouvement de translation radial par rapport à l'axe de la tourelle qui a pour effet de décaler la partie supérieure et la partie inférieure du moule, l'accès aux cavités pour le déchargement des objets 10 est facilité. Par conséquent, des moyens de déchargement plus simples peuvent être utilisés.

Il est avantageux lors du démoulage des objets 10 de conserver leur orientation afin de faciliter les opérations supplémentaires devant être effectuées ensuite. Il est avantageux par exemple de profiter de la station de déchargement 9 pour réaliser des contrôles sur les objets 10. Des contrôles dimensionnels ou esthétiques réalisés par l'intermédiaire de moyens optiques peuvent s'intégrer facilement sur la station de déchargement 9.

Dans des modes d'exécution, le dispositif de surmoulage par injection 1 peut comporter des stations optionnelles 25 représentées en pointillées sur la figure 1. Ces stations optionnelles illustrent la modularité du dispositif proposé. Les stations optionnelles peuvent consister à effectuer une opération de contrôle de l'objet qui se trouve dans la cavité du moule ; ou une opération d'impression de l'objet; ou encore une opération d'assemblage ; ou encore une autre opération de moulage. Il est important de remarquer que ces opérations sont rendues possibles du fait notamment que les moyens de d'ouverture et fermeture du moule ainsi que les moyens de verrouillage déverrouillage du moule sont embarqués sur la tourelle.

L'invention permet l'ajout optionnel d'autres stations fixes autour de la tourelle rotative indexée 2. L'invention permet par exemple l'ajout d'une station pour contrôler la présence et la position d'un insert 6 dans chaque cavité 18. D'autres stations peuvent être ajoutées comme par exemple des stations d'impression, d'assemblage, de contrôle dimensionnel ou de soudage.

Les modes d'exécution de la présente invention sont donnés à titre d'exemples et ne doivent être considérés comme limitatifs. Des variations sont possibles dans le cadre de la protection revendiquée, notamment en faisant appel à des moyens équivalents. Les différents modes d'exécution décrits peuvent aussi être combinés entre eux.

### Références numériques

1 : dispositif selon l'invention
2 : tourelle
3 : secteur
4 : mouvement de rotation indexé
5 : station de chargement des inserts
6 : insert
7 : station d'injection
8 : moule
9 : station de démoulage
10 : objet moulé
11 : bloc matrice
12 : bloc poinçon
13 : matrice de moule
14 : poinçon
15 : queue de poinçon
16 : moyens de verrouillage
17 : carotte
18 : cavité
19 : moyens de fermeture sous contrainte
20 : moyens de compactage
21 : buse d'injection
22 : embout de buse d'injection
23 : reçu de buse
24 : seuil d'injection
25 : station de contrôle des inserts
26 : station de refroidissement et compactage ou contrôle
27 : station de refroidissement et compactage ou contrôle
28 : moyens d'injection
29 : pot d'injection
30 : clapet ou électrovanne
31 : canal chaud

## Revendications

1. Dispositif de surmoulage par injection comprenant au moins une tourelle rotative indexée (2) sur laquelle sont embarqués des moules (8) refroidis, chaque moule comprenant une pluralité de cavités (18), et des stations fixes (5,25,7,26,27,9) disposées autour de ladite tourelle, parmi lesquelles stations au moins une première station (5), une deuxième station (7) et une troisième station (9) sont utilisées, respectivement, pour effectuer les opérations de positionnement des inserts dans les cavités du moule, d'injection de la matière plastique dans les cavités du moule, et de démoulage des objets au moins partiellement refroidis, ledit dispositif comprenant pour chaque cavité (18) des moyens d'injection (28, 29, 30, 31) indépendants.

2. Dispositif selon la revendication précédente, dans lequel chaque moule (8) dispose de moyens de verrouillage (16) indépendants embarqués sur la tourelle (2).

3. Dispositif de surmoulage selon l'une des revendications précédentes, dans lequel chaque cavité (18) dispose d'un moyen de fermeture sous contrainte (19) fixe et indépendant permettant de mettre en pression de façon directe les cavités (18) pendant le remplissage desdites cavités.

4. Dispositif selon l'une des revendications précédentes, dans lequel chaque cavité (18) dispose de moyens de compactage (20) indépendants embarqués sur la tourelle (2).

5. Dispositif selon la revendication précédente, dans lequel les moyens de compactage sont des moyens actifs ou des moyens passifs.

6. Dispositif selon l'une des revendications précédentes, dans lequel la première station pour effectuer les opérations de positionnement des inserts dans les cavités du moule comprend des moyens de positionnement pour placer les inserts dans les cavités.

7. Dispositif selon l'une des revendications précédentes, dans lequel la deuxième station d'injection de la matière plastique dans les cavités du moule comprend les moyens d'injection (28,29) indépendants pour remplir les cavités (18).

8. Dispositif selon l'une des revendications précédentes, dans lequel la troisième station comprend des moyens de déchargement.

9. Dispositif selon l'une des revendications précédentes, dans lequel les stations restantes sont utilisées pour augmenter le temps de refroidissement, ou pour effectuer des opérations de contrôles, ou pour réaliser des opérations d'actionnement des moules, ou encore pour effectuer des opérations sur les inserts et/ou sur les objets moulés.

10. Dispositif selon l'une des revendications précédentes, dans lequel la tourelle comprend un nombre de station compris entre trois et huit.

11. Dispositif selon l'une des revendications précédentes, dans lequel le nombre de moules disposés sur la tourelle est égal au nombre de stations.

12. Dispositif selon l'une des revendications précédentes, dans lequel le nombre de moules multi-cavités disposés sur la tourelle est au moins de cinq, et est préférentiellement compris entre cinq et huit.

13. Procédé de surmoulage par injection réalisé sur une tourelle rotative indexée et comportant au moins les opérations successives suivantes
- Positionnement d'inserts dans les cavités du moule
- Fermeture du moule
- Verrouillage du moule, fermeture sous contrainte des cavités du moule de façon individuelle,
- Début de l'injection dans chaque cavité de façon individuelle;
- Fin de l'injection
- Figeage du seuil
- Libération de la fermeture sous contrainte du moule
- Début du compactage
- Refroidissement
- Déverrouillage du moule, fin du compactage
- Ouverture du moule
- Déchargement des objets moulés.

14. Procédé selon la revendication précédente dans lequel, les opérations de fermeture et d'ouverture du moule, de compactage, de refroidissement et de déverrouillage sont effectuées pendant la rotation de la tourelle.

15. Procédé selon la revendication 13 ou 14, dans lequel le mouvement d'ouverture et de fermeture du moule comprend un mouvement de translation radial par rapport à l'axe de la tourelle pour décaler deux parties du moule.

16. Procédé selon l'une des revendications précédentes 13 à 15, dans lequel les inserts sont du même type ou d'un type différent.

17. Procédé selon l'une des revendications précédentes 13 à 16, dans lequel les inserts sont bloqués par des moyens de blocage dans la cavité du moule une fois positionnés.

18. Procédé selon l'une des revendications précédentes 13 à 17, dans lequel la présence et la position des inserts est contrôlée avant la fermeture du moule.

19. Procédé selon l'une des revendications précédentes 13 à 18, dans lequel la fermeture sous contrainte du moule est effectuée par des moyens fixes lorsque le moule est dans la station d'injection.

20. Procédé selon l'une des revendications précédentes 13 à 19, dans lequel chaque cavité dispose de moyens de fermeture sous contrainte.

21. Procédé selon l'une des revendications précédentes 13 à 20, dans lequel l'injection se fait sans carotte d'alimentation.

22. Procédé selon l'une des revendications précédentes 13 à 21, dans lequel lors du déchargement, un contrôle est effectué sur les objets moulés.

23. Procédé selon la revendication précédente 13 à 22, dans lequel le contrôle est un contrôle de qualité, ou de dimension, ou esthétique ou une combinaison.

24. Procédé selon la revendication précédente 13 à 23, dans lequel le contrôle est optique.

## Patentansprüche

1. Vorrichtung zum Umspritzen, die mindestens einen indexierten Drehturm (2) aufweist, auf dem sich gekühlte Formen (8) befinden, wobei jede Form eine Vielzahl von Hohlräumen (18) und feste Stationen (5, 25, 7, 26, 27, 9) aufweist, die um den Turm herum angeordnet sind, wobei von den Stationen mindestens eine erste Station (5), eine zweite Station (7) und eine dritte Station (9) verwendet werden, um jeweils die Vorgänge zum Positionieren der Einsätze in die Hohlräume der Form, zum Einspritzen des Kunststoffmaterials in die Hohlräume der Form und zum Herausnehmen der mindestens teilweise gekühlten Objekte aus der Form durchzuführen, wobei die Vorrichtung für jeden Hohlraum (18) unabhängige Mittel zum Einspritzen (28, 29, 30, 31) aufweist.

2. Vorrichtung nach dem vorhergehenden Anspruch, wobei jede Form (8) über unabhängige Verriegelungsmittel (16) verfügt, die sich auf dem Turm (2) befinden.

3. Vorrichtung zum Umspritzen nach einem der vorhergehenden Ansprüche, wobei jeder Hohlraum (18) über ein festes und unabhängiges Mittel zum Zwangsschließen (19) verfügt, das es ermöglicht, die Hohlräume (18) während des Füllens der Hohlräume direkt unter Druck zu setzen.

4. Vorrichtung nach einem der vorhergehenden Ansprüche, wobei jeder Hohlraum (18) über unabhängige Verdichtungsmittel (20) verfügt, die sich auf dem Turm befinden (2).

5. Vorrichtung nach dem vorhergehenden Anspruch, wobei die Verdichtungsmittel aktive oder passive Mittel sind.

6. Vorrichtung nach einem der vorhergehenden Ansprüche, wobei die erste Station zum Ausführen der Vorgänge zum Positionieren der Einsätze in die Hohlräume der Form Positionierungsmittel zum Platzieren der Einsätze in den Hohlräumen aufweist.

7. Vorrichtung nach einem der vorhergehenden Ansprüche, wobei die zweite Station zum Einspritzen des Kunststoffmaterials in die Hohlräume der Form unabhängige Mittel zum Einspritzen (28, 29) aufweist, um die Hohlräume (18) zu füllen.

8. Vorrichtung nach einem der vorhergehenden Ansprüche, wobei die dritte Station Mittel zum Entladen aufweist.

9. Vorrichtung nach einem der vorhergehenden Ansprüche, wobei die verbleibenden Stationen verwendet werden, um die Kühlzeit zu erhöhen oder um Prüfvorgänge durchzuführen oder um Vorgänge zum Betätigen der Formen durchzuführen oder auch um Vorgänge an den Einsätzen und/oder den geformten Objekten durchzuführen.

10. Vorrichtung nach einem der vorhergehenden Ansprüche, wobei der Turm eine Anzahl von Stationen zwischen drei und acht aufweist.

11. Vorrichtung nach einem der vorhergehenden Ansprüche, wobei die Anzahl der auf dem Turm angeordneten Formen gleich der Anzahl der Stationen ist.

12. Vorrichtung nach einem der vorhergehenden Ansprüche, wobei die Anzahl der auf dem Turm angeordneten Formen mit mehreren Hohlräumen mindestens fünf beträgt und vorzugsweise zwischen fünf und acht liegt.

13. Verfahren zum Umspritzen, das mit einem indexierten Drehturm durchgeführt wird und mindestens die folgenden nacheinander ablaufenden Vorgänge aufweist:
- Positionieren von Einsätzen in die Hohlräume der Form,
- Schließen der Form,
- Verriegeln der Form, individuelles Zwangsschließen der Hohlräume der Form,
- Beginnen des individuellen Einspritzens in jeden Hohlraum,
- Beenden des Einspritzens,
- Erstarren der Schwelle,
- Freigeben des Zwangsschließens der Form,
- Beginnen des Verdichtens,
- Kühlen
- Entriegeln der Form, Beenden des Verdichtens,
- Öffnen der Form,
- Herausnehmen der geformten Objekte.

14. Verfahren nach dem vorhergehenden Anspruch, wobei die Vorgänge des Schließens und Öffnens der Form, des Verdichtens, des Kühlens und des Entriegelns während der Drehung des Turms durchgeführt werden.

15. Verfahren nach Anspruch 13 oder 14, wobei die Öffnungs- und Schließbewegung der Form eine radiale Translationsbewegung relativ zur Achse des Turms aufweist, um zwei Teile der Form zu versetzen.

16. Verfahren nach einem der vorhergehenden Ansprüche 13 bis 15, wobei die Einsätze vom gleichen Typ oder von einem unterschiedlichen Typ sind.

17. Verfahren nach einem der vorhergehenden Ansprüche 13 bis 16, wobei die Einsätze durch Blockiermittel in dem Hohlraum der Form blockiert werden, sobald sie positioniert sind.

18. Verfahren nach einem der vorhergehenden Ansprüche 13 bis 17, wobei das Vorhandensein und die Position der Einsätze vor dem Schließen der Form überprüft werden.

19. Verfahren nach einem der vorhergehenden Ansprüche 13 bis 18, wobei das Zwangsschließen der Form mit festen Mitteln durchgeführt wird, wenn sich die Form in der Station zum Einspritzen befindet.

20. Verfahren nach einem der vorhergehenden Ansprüche 13 bis 19, wobei jeder Hohlraum über Mittel zum Zwangsschließen verfügt.

21. Verfahren nach einem der vorhergehenden Ansprüche 13 bis 20, wobei das Einspritzen ohne Zufuhrkern erfolgt.

22. Verfahren nach einem der vorhergehenden Ansprüche 13 bis 21, wobei während des Entladens eine Prüfung an den geformten Objekten durchgeführt wird.

23. Verfahren nach dem vorhergehenden Anspruch 13 bis 22, wobei die Prüfung eine Qualitätskontrolle oder eine Maßkontrolle oder eine Kontrolle des Aussehens oder eine Kombination daraus ist.

24. Verfahren nach dem vorhergehenden Anspruch 13 bis 23, wobei die Kontrolle optisch ist.

## Claims

1. Injection overmolding device comprising at least one indexed rotary turret (2) on which cooled molds (8) are installed, each mold comprising a plurality of cavities (18) and stationary stations (5, 25, 7, 26, 27, 9) arranged around said turret, including at least a first station (5), a second station (7) and a third station (9) that are used, respectively, for carrying out the operations of positioning the inserts in the cavities of the mold, injecting plastic material into the cavities of the mold and demolding the at least partially cooled objects, said device comprising, for each cavity (18), independent injection means (28, 29, 30, 31).

2. Device according to the preceding claim, wherein each mold (8) has independent means for locking (16) installed on the turret (2).

3. Overmolding device according to one of the preceding claims, wherein each cavity (18) has stationary and independent forced means for closing (19) making it possible to apply pressure directly onto the cavities (18) during the filling of said cavities.

4. Device according to one of the preceding claims, wherein each cavity (18) has independent compacting means (20) installed on the turret (2).

5. Device according to the preceding claim, wherein the compacting means are active means or passive means.

6. Device according to one of the preceding claims, wherein the first station for carrying out the operations of positioning the inserts in the cavities of the mold comprises means for positioning, in order to place the inserts in the cavities.

7. Device according to one of the preceding claims, wherein the second station for injecting plastic material into the cavities of the mold comprises independent injection means (28, 29) for filling the cavities (18).

8. Device according to one of the preceding claims, wherein the third station comprises unloading means.

9. Device according to one of the preceding claims, wherein the remaining stations are used to increase the cooling time or to carry out control operations or to carry out operations for actuating the molds or even to carry out operations on the inserts and/or on the molded objects.

10. Device according to one of the preceding claims, wherein the turret comprises a number of stations between three and eight.

11. Device according to one of the preceding claims, wherein the number of molds arranged on the turret is equal to the number of stations.

12. Device according to one of the preceding claims, wherein the number of multi-cavity molds arranged on the turret is at least five and is preferably between five and eight.

13. Method for injection overmolding carried out on an indexed rotary turret and comprising at least the following successive operations
- positioning inserts into the cavities of the mold
- closing the mold
- locking the mold, individual forced closing of the cavities of the mold,
- independent start of the injection into each cavity,
- ending the injection
- solidification of the gate
- releasing the forced closing of the mold
- starting the compacting
- cooling
- unlocking the mold, ending the compacting
- opening the mold
- unloading the molded objects.

14. Method according to the preceding claim, wherein the operations of closing and opening the mold, compacting, cooling and unlocking are carried out during the rotation of the turret.

15. Method according to Claim 13 or 14, wherein the movement of opening and closing the mold comprises a radial translational movement relative to the axis of the turret in order to shift the two parts of the mold.

16. Method according to one of the preceding Claims 13 to 15, wherein the inserts are of the same type or of a different type.

17. Method according to one of the preceding Claims 13 to 16, wherein the inserts are blocked by the blocking means in the cavity of the mold, once positioned.

18. Method according to one of the preceding Claims 13 to 17, wherein the presence and the position of the inserts is monitored before the closing of the mold.

19. Method according to one of the preceding Claims 13 to 18, wherein the forced closing of the mold is carried out by stationary means when the mold is in the station for injecting.

20. Method according to one of the preceding Claims 13 to 19, wherein each cavity has forced means for closing.

21. Method according to one of the preceding Claims 13 to 20, wherein the injection is carried out without the occurrence of sprue.

22. Method according to one of the preceding Claims 13 to 21, wherein, during the unloading, a monitoring is carried out on the molded objects.

23. Method according to the preceding Claim 13 to 22, wherein the monitoring is a monitoring of the quality or dimensions or appearance or a combination thereof.

24. Method according to the preceding Claim 13 to 23 wherein the monitoring is optical.
